# EUROPEAN PATENT SPECIFICATION

(11) **EP 0 698 903 B1**
(45) Date of publication and mention of the grant of the patent: **15.11.2000**
(21) Application number: 95113320.6
(22) Date of filing: 24.08.1995
(51) Int. Cl.: H01J 17/20, H01J 17/49, H01J 17/48

(54) **Plasma discharge apparatus**
Plasmaentladungsgerät
Appareil de décharge à plasma

(30) Priority: 24.08.1994 JP 19963594
(43) Date of publication of application: 28.02.1996
(73) Proprietor: SONY CORPORATION, Tokyo (JP)
(72) Inventor: Moritsa, Tetsuya, Shinagawa-ku, Tokyo (JP)
(74) Representative: Müller, Frithjof E., Dipl.-Ing.

(56) References cited:
- EP-A- 0 279 744
- EP-A- 0 567 021
- US-A- 4 085 351
- US-A- 5 077 553
- US-A- 5 272 472
- ANONYMOUS: "Technique For Generation of Color In AC Plasma Display Panel. June 1979." IBM TECHNICAL DISCLOSURE BULLETIN, vol. 22, no. 1, June 1979, NEW YORK, US, pages 170-171, XP002048268

## Description

### BACKGROUND OF THE INVENTION

### 1. Field of the Invention

The present invention relates to a plasma discharge apparatus, more particularly a plasma addressed display apparatus such as a plasma addressed electro-optical apparatus, still more particularly to an improvement of the gas sealed in a plasma chamber.

### 2. Description of Related Art

In the past, there has been known a matrix type electro-optical apparatus using a livid crystal cell as the electro-optical cell, for example, a liquid crystal display apparatus. An active matrix type liquid crystal display apparatus has been developed which provides a switching element such as a thin film transistor for each pixel and linearly drives the same as a means for achieving a higher resolution and higher contrast.

In this case, however, there is the problem that it is necessary to provide a large number of thin film transistors or other semiconductor elements on the substrate. The manufacturing yield becomes poor when the surface area is increased.

For this reason, recently a system of use of plasma switches, that is, one which utilizes switches operating based on plasma discharge instead of switching elements comprised of thin film transistors, to drive the electro-optical cell has been proposed (for example, see Japanese Unexamined Patent Publication (Kokai) No. 1-217396 and Japanese Unexamined Patent Publication (Kokai) No. 5-297359).

A plasma addressed display apparatus utilizing such a plasma switch has a display cell comprised, for example, of a livid crystal cell and has a plasma cell arranged close to this having a plasma chamber of a range of discharge of a plasma electrode formed in the row direction in a stripe manner. The display cell is driven for each pixel by the electric field based on the range of discharge of this plasma cell.

As the discharge gas sealed in such a plasma chamber, from the viewpoint of lowering the discharge voltage (Vf), a Penning gas has been used. The Penning gas is prepared by mixing a minute amount of xenon (Xe) and argon (Ar) in a base of helium (He) or neon (Ne) (for example, He₉₉Xe₁, Ne_{99.5}Ar_{0.5}).

However, both of the He-based Penning gas and the Ne-based Penning gas have problems as will be mentioned below. Namely, it has become clear from experiments carried out by the present inventors that the He-based Penning gas is apt to cause cathode sputtering and shortens the service life of a display apparatus. In a plasma addressed display apparatus, a metal such as nickel or aluminum is used as the cathode material, but in comparison with an Ne-based Penning gas, there is conspicuous deterioration due to the sputtering of the cathode. When the cathode is being sputtered, the sputtered substance deposits at the opening portion and thereby causes a reduction of the transmittance. Further, with an He-based Penning gas, since the He molecules are small, they are apt to scatter from the thin plate glass (for example, thickness of 50 µm) constituting a part of the plasma chamber to the outside. For example, in an actual display apparatus, to stabilize the discharge, mercury is diffused in the display chamber, but in the heat treatment step for the diffusion (for example, 250°C for 48 hours), the He ends up scattered and lost to the outside. In a case of a 14-inch panel having an inner volume of about 10 cc, if the He gas pressure is set to 120 Torr, the gas pressure ends up lowered to about 40 Torr in the above-described heat treatment step and there was the problem that the effective plasma could no longer be formed.

On the other hand, where an Ne-based Penning gas is used, although there is less of a problem of the cathode sputtering and the scattering and loss of the gas as described above, there was a problem in that the orange discharge color of Ne lowers the contrast of the display and the color purity.

Prior art document EP-A-0 279 744 discloses a fluorescent gas discharge display panel wherein a gas discharge chamber contains a gas mixture of neon, argon, and xenon, the argon gas content being more than 5 percent and the xenon gas content being less than 10 percent.

Further, prior art document EP-A-0 567 021 describes a plasma addressing electro-optical device wherein a discharge chamber contains a gas which may be selected from, for example, helium, neon, argon or any mixture of such gases.

Further, prior art document US-A-5,077,573 describes helium as an ionizable gas, and prior art document US-A-5,272,472 discloses an apparatus for addressing data storage elements with an ionizable gas which preferably includes helium.

### SUMMARY OF THE INVENTION

An object of the present invention is to provide a plasma discharge apparatus which can exhibit good characteristics stably for a long period.

Another object of the present invention is to provide a further improved plasma addressed display apparatus which is free from the problem of color, has little scattering and loss of gas, is superior in durability, and has little erroneous writing.

To solve this object the present invention provides a plasma discharge apparatus as specified in claim 1, and a plasma addressed electro-optical apparatus as specified in claim 6.

Preferably, one of the pair of substrates is a dielectric sheet.

Preferably, the plasma discharge apparatus is further provided with an electro-optical cell holding an electro-optical material between the dielectric sheet and a glass substrate.

Preferably, the electro-optical cell is a liquid crystal display cell which has a plurality of signal electrodes arranged in parallel at the inside of the glass substrate and which has as the electro-optical material a liquid crystal.

Preferably, the other of the pair of substrates has a plurality of discharge electrodes on it and a plasma discharge is caused between adjoining discharge electrodes to address the liquid crystal cell.

Preferably, the plasma addressed electro-optical apparatus is provided with a dielectric sheet interposed between the plasma cell and electro-optical cell.

The electro-optical cell may be a liquid crystal display cell comprising a liquid crystal filled between a first glass substrate having a plurality of signal electrodes arranged in parallel on its inside and the dielectric sheet.

The plasma cell may be comprised of a second glass substrate and the dielectric sheet between which is sealed the ionizable gas.

The plasma cell may be provided with a plurality of discharge electrodes formed on the second glass substrate and a plasma discharge is caused between adjoining discharge electrodes to address the electro-optical cell.

The present inventors engaged in intensive studies so as to solve the problems of the lowering of the service life or characteristics of the products due to the discharge gas as described above in a plasma discharge apparatus and as a result discovered that a plasma discharge apparatus having a longer service life and a shorter plasma life can be formed without greatly increasing the discharge voltage compared with the case of the conventionally used He-based or Ne-based Penning gas by using as the discharge gas a mixed gas prepared by incorporating in a base of Ne (neon) a specific ratio of Ar, Kr and Xe and thereby completed the present invention.

In the plasma addressed display apparatus , the display cell may be for example a liquid crystal cell.

Each of molecules contained in the above-described mixed gas used in the present invention becomes a considerably large molecule in comparison with He and therefore even if the heat treatment for the diffusion of mercury is carried out, the problem of scattering and loss of the gas molecules from the plasma cell as mentioned above does not occur, a predetermined gas pressure, for example, 120 Torr, can be maintained, and a stable plasma formation in comparison with the conventionally used He-based Penning gas is possible.

Also, in comparison with the He-based Penning gas, with the Ne-based mixed gas according to the present invention, the rate of advance of the cathode sputtering is much slower in the same way as the conventional Ne-based Penning gas and, the rate of deterioration of the transmittance due to such cathode sputtering is slower by one order than a case where the He-based Penning gas is used.

Further, where the mixed gas according to the present invention is used, although not comparable to the case where the He-based Penning gas is used, the luminance is sufficiently low in comparison with the case of the Ne-based Penning gas, the color is close to white, and the contrast of the display and the color purity are not substantially impaired, so good characteristics are obtained.

Note that, by adding Ar or the like to the Ne, the discharge voltage Vf which is needed rises in comparison with the case of the Ne-based Penning gas but in the present invention, the amount of addition thereof is restricted to 10 to 30 percent by volume, and therefore the amount of rise thereof is suppressed to about 20V and it is possible to substantially prevent problems such as a rise of the power consumption, voltage resistance of the driver transistor, etc.

Further, in the present invention, since the Ne-Ar (10 to 30 percent by volume)-based gas includes a specific ratio of K and Xe (1 to 10 percent by volume), the attenuation time of the plasma can be made about 1/2 compared with the Ne-Ar (10 to 30 percent by volume)-based gas. If the attenuation time of the plasma becomes shorter, there is no longer data voltage erroneously applied to a pixel corresponding to a plasma chamber which inherently should not be written at the time of selection of the next line and, also, a sufficient contrast can be obtained.

### BRIEF DESCRIPTION OF THE DRAWINGS

These and other objects and features of the present invention will become clearer from the following description of the preferred embodiments given with reference to the attached drawings, in which:
Fig. 1 and 2 are schematic cross-sectional views of examples of the configuration of a plasma addressed display apparatus according to an embodiment of the present invention;
Fig. 3 is a perspective view of the plasma addressed display apparatus shown in Fig. 2;
Fig. 4 is a view showing the arrangement of the data electrodes, plasma electrodes, and plasma chambers in the plasma addressed display apparatus shown in Fig. 3;
Fig. 5 is a view of the circuit configuration of a plasma addressed display apparatus;
Figs. 6A to 6E are waveform diagrams showing changes in the cathode voltage and data voltage;
Fig. 7 is a graph of the relationship between the composition of an Ne-Ar-based mixed gas and a discharge voltage;
Fig. 8 is a graph of the relationship between various types of mixed gases and the change of the transmittance; and
Fig. 9 is a view of the relationship between the residual amount of plasma in the case of use of the discharge gas according to the embodiment of the present invention and the case of use of the discharge gas according to a comparative example.

### DESCRIPTION OF THE PREFERRED EMBODIMENTS

Below, a plasma discharge apparatus and a plasma addressed display apparatus of the present invention will be explained further concretely by embodiments.

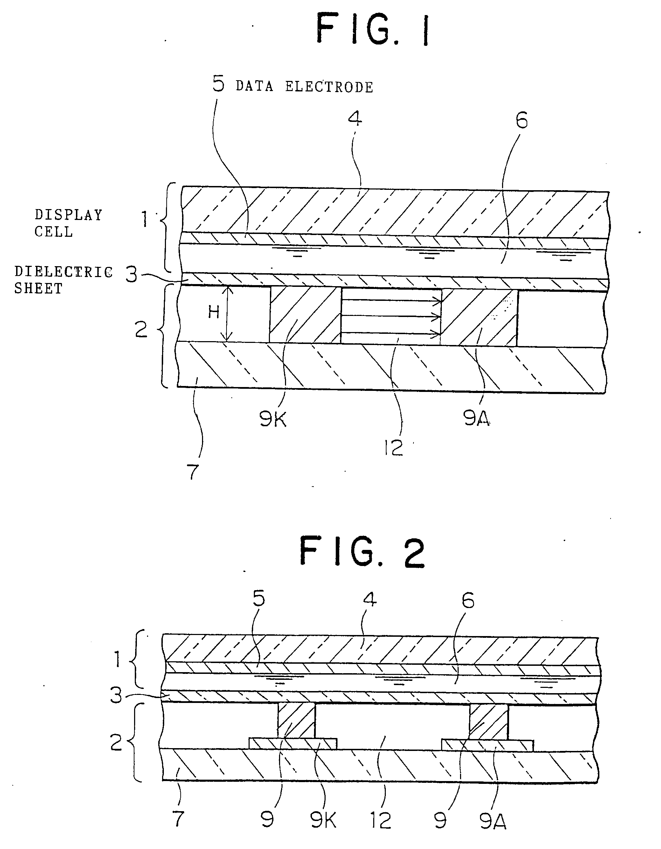

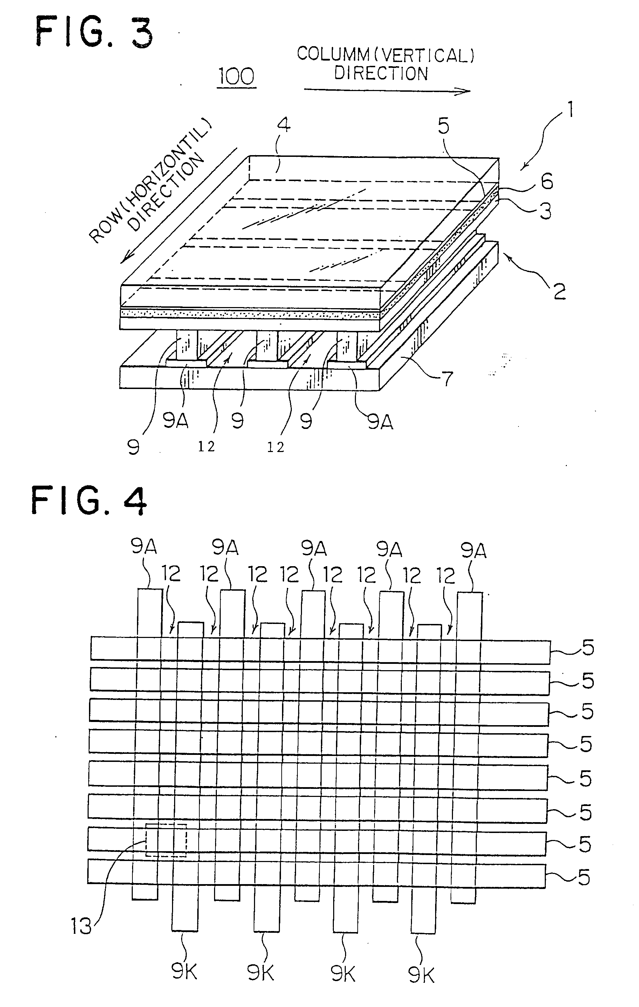

Figure 1 and 2 are schematic partial cross-sectional views showing a construction of examples of a plasma address display apparatus which drives the liquid crystal cell by utilizing such a plasma switch and represents a shape cut along the column direction, that is, the signal electrode direction. In the example shown in Fig. 1, an explanation will be made by using as an example the plasma cell of a wall surface type electrode construction. In the example shown in Fig. 2, an explanation will be made by using a plasma cell of the flat plane type electrode construction. Figure 3 is a perspective view of the plasma addressed display apparatus shown in Fig. 2.

The plasma addressed display apparatus according to the present invention is a plasma addressed display apparatus 100 comprised of an electro-optical display cell 1, a plasma cell 2, and a dielectric sheet 3 interposed between the two, thereby forming a flat panel construction. The dielectric sheet 3 is comprised of a thin plate of glass etc. The dielectric sheet 3 has to be made as thin as possible to enable driving of the display cell 1 and for example is formed to a thickness of about 50 µm.

The display cell 1 is comprised using an upper transparent glass substrate (top substrate) 4. On the main surface of the inside of the upper substrate 4 are formed a plurality of data electrodes 5, comprised of a transparent electroconductive material and extending in the column direction (vertical direction), in parallel in the row direction (horizontal direction) maintaining predetermined intervals along the column direction. The upper substrate 4 is joined to the dielectric sheet 3 in a state maintaining a certain clearance therewith by a spacer (not shown). In the clearance between the upper substrate 4 and the dielectric sheet 3 is filled a liquid crystal, serving as the, electro-optical material, to form the liquid crystal layer 6. Here, the size of the clearance between the upper substrate 4 and the dielectric sheet 3 is made, for example, 4 to 10 µm. This distance is maintained uniformly over the entire display face. Note that in this embodiment, use was made of a liquid electro-optical material, but in the plasma addressed display apparatus of the present invention, this electro-optical material does not necessarily have to be a liquid crystal. Use may be made of an electro-optical crystal plate etc.

On the other hand, the plasma cell 2 is constituted using a lower glass substrate (lower substrate) 7. On the main surface of the inside of the lower substrate 7, a plurality of anode electrodes 9A and cathode electrodes 9K constituting the plasma electrodes and extending in the row direction are formed in parallel in the column direction while maintaining a predetermined interval between them. At the approximate centers of the top surfaces of the anode electrodes 9A and the cathode electrodes 9K are formed partition walls 9 of predetermined widths extending along those electrodes. The tops of the partition walls 9 abut against the bottom surfaces of the dielectric sheet 3 to maintain the size of the clearance between the lower substrate 7 and the dielectric sheet 3 constant. The partition walls 9 may, for example, be formed by repeated thick film screen printing.

Further, a frit sealing member (not shown) made using a low melting point glass etc. is laid along the periphery of the lower substrate 7 to enable air-tight bonding of the lower substrate 7 and the dielectric sheet 3. In the clearance between the lower substrate 7 and the dielectric sheet 3 are formed, in parallel in the column direction, a plurality of plasma chambers (spaces) 12 separated by the partition walls 9 and extending in the row direction. That is, the plasma chambers 12 are formed to be orthogonal with the data electrodes 5. The discharge gas filled in the plasma chambers 12 will be explained later.

The data electrodes 5 become the row driven elements. Further, as mentioned later, since the anode electrodes 9A are connected in common and supplied with an anode voltage, the pair of plasma chambers 12 positioned at the two sides of each cathode electrode 9K become column-driven units. A pixel 13 is defined, as shown in Fig. 4, at the intersection of the two.

In the above configuration, when a predetermined voltage is supplied between the anode electrode 9A and the cathode electrode 9K corresponding to a predetermined pair of plasma chambers 12, the gas at the portion of the pair of plasma chambers 12 is selectively ionized and generates a plasma discharge. A substantially anodic potential is maintained inside. In this state, when data voltage is successively supplied to a data electrode 5, data voltage is written through the dielectric sheet 3 at the liquid crystal layers 6 of the plurality of pixels 13 arranged in the row direction corresponding to the pair of plasma chambers 12 where the plasma discharge occurred. When the plasma discharge ends, the plasma chambers 12 become floating potentials and the data voltage written in the liquid crystal layers 6 of the pixels 13 are held by the action of the dielectric sheet 3 until the next writing period (for example, after one frame). In this case, the plasma chambers 12 function as sampling switches and the liquid crystal layers 6 of the pixels and/or the dielectric sheet 3 function as sampling capacitors.

Since the liquid crystal operates due to the data voltage written in the liquid crystal layers 6 of the pixels 13, the display is performed in pixel units. Accordingly, as mentioned above, it is possible to display a two-dimensional image by generating a plasma discharge and successively scanning in the column direction the pairs of plasma chambers 12 where data voltage has been written in the liquid crystal layers 6 of the plurality of pixels 13 arranged in the row direction.

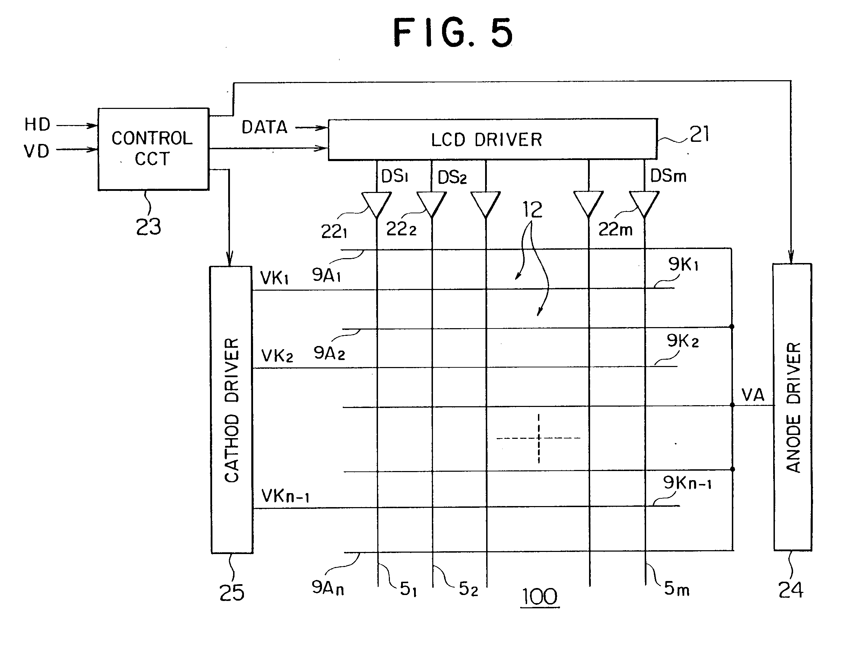

Figure 5 is a view of the circuit configuration of the plasma addressed display apparatus 100 explained above. In Fig. 5, portions corresponding to Fig. 1 to Fig. 3 are given the same references. Reference numeral 21 is a liquid crystal driver, which liquid crystal driver 21 is supplied with video data (DATA). Data voltages DS₁ to DSₘ of a plurality of pixels constituting the lines are simultaneously output from the liquid crystal driver 21. The data voltages DS₁ to DSₘ of the plurality of pixels are supplied through the buffers 22₁ to 22ₘ to the plurality of data electrodes 5₁ to 5ₘ.

Note that the operation of the liquid crystal driver 21 is controlled by the control circuit 23. The control circuit 23 is supplied with a horizontal synchronization signal HD and a vertical synchronization signal VD as reference synchronisation signals corresponding to the video data (DATA). Further, the operations of the later mentioned anode driver 24 and cathode driver 25 are controlled by the control circuit 23.

Reference numeral 24 denotes an anode driver. This anode driver 24 supplies a plurality of commonly connected anode electrodes 9A₁ to 9Aₙ with an anode voltage VA as a reference voltage. Reference numeral 25 is a cathode driver. The cathode driver 25 supplies the cathode voltages VK₁ to VKₙ₋₁ having a predetermined potential difference from the anode potential to the plurality of cathode electrodes 9K₁ to 9Kₙ₋₁ every horizontal period. Due to this, a plasma discharge is caused at the pairs of plasma chambers 12 corresponding to the cathode electrodes 9K₁ to 9Kₙ₋₁ every horizontal period and, accordingly, the pairs of plasma chambers 12 where data voltages DS₁ to DSₘ are written in the liquid crystal layers 6 of the plurality of pixels 13 arranged in the row direction (horizontal direction) are successively scanned in the column direction (vertical direction).

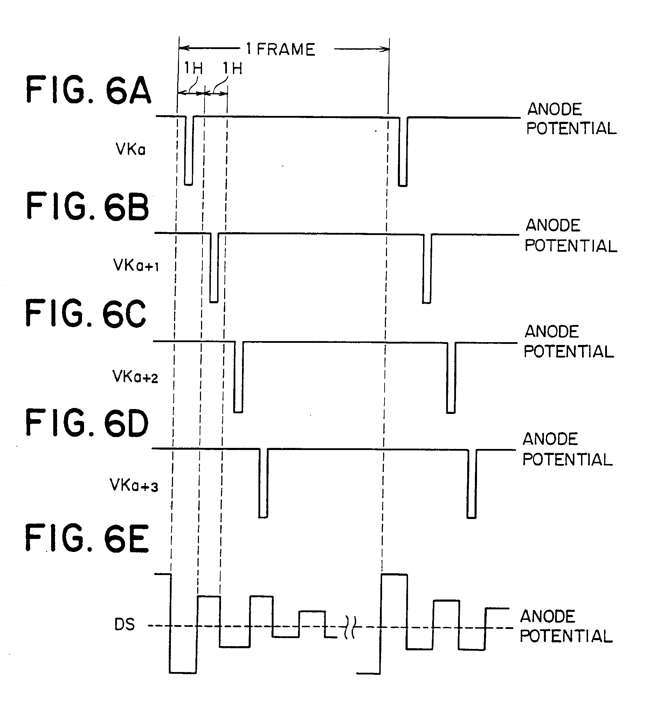

Here, an explanation will be made of the cathode voltage supplied to the cathode electrode 9K and the data voltage DS supplied to the data electrode 5. Figures 6A to 6D are views of wave-forms of the cathode voltages VKₐ to VKₐ₊₃ supplied to the consecutive cathode electrodes 9Kₐ to 9Kₐ₊₃. Figure 6E is a view of the data voltage DS supplied to a predetermined data electrode 5. The cathode electrodes 9Kₐ to 9Kₐ₊₃ are supplied with the cathode voltages VKₐ to VKₐ₊₃ having a predetermined potential difference from the anode potential within consecutive single horizontal periods (1H) every frame. Due to this, the plasma chambers 12 generating the plasma discharge are successively scanned in the column direction (vertical direction). Further, the data voltage DS is inverted in polarity with respect to the anode potential every horizontal period and every frame, so the liquid crystal layers 6 are alternately driven. The liquid crystal layers 6 are alternately driven so as to prevent deterioration of the liquid crystals.

### Technical background example

In the present embodiment, which does not fall within the scope of the invention in the internal portion of this tight sealed plasma chamber 12, a mixed gas represented by Ne₁₀₀₋ₓ Aₓ (wherein, in the formula, A is any element selected from a group consisting of Ar, Kr, and Xe and x is 10 to 30% by volume, more preferably 15 to 25% by volume) is sealed. Note that, in this mixed gas, if the content of the A component is less than 10 percent by volume, a problem of emission of the orange color light peculiar to Ne occurs, while if it exceeds 30 percent by volume, the discharge voltage Vf extremely rises, neither of which is preferred. Also, among the Ar, Kr, and Xe to be mixed into the Ne, mainly from an economical viewpoint, Ar and Kr are preferred.

Note that, as shown in Fig. 1, where the wall surface electrode construction (parallel flat plate electrode construction) is adopted in this way, a gas pressure two times higher than that of the flat plane electrode construction as disclosed in Japanese Unexamined Patent Publication (Kokai) No. 3-47784 is necessary, and also the discharge starting voltage becomes higher by about several tens of volts. The reason for this can be considered to be that the discharge route of the wall surface electrode construction is a straight line and is shortened while the discharge route of the flat plane electrode construction is a parabola. Accordingly, a relatively high gas pressure becomes necessary based on the rule of Paschen. The discharge starting voltage is affected by various factors such as the surface state of the wall surface electrode etc. and it becomes slightly high. However, the wall surface electrode construction as in this embodiment is advantageous in the point that a stable plasma discharge in comparison with the flat plane electrode construction is obtained and the point that the plasma discharge can be efficiently carried out etc. and is advantageous in view of the fewer restrictions at the time of a production of the cell construction in comparison with the inclined plane electrode construction as disclosed in Japanese Unexamined Patent Publication (Kokai) No. 1-217396. However, of course, in the plasma addressed display apparatus, there is no restriction on the construction of the plasma cell either, and various types of aspects as described above can be adopted. For example, in the example shown in Fig. 1, an explanation was made by using as an example the plasma cell of a wall surface type electrode construction, but the electrode construction is not particularly restricted and the present example can be applied also with respect to a plasma cell of the flat plane type electrode construction shown in Fig. 2. In the electrode construction shown in Fig. 2, the electrodes of the cathode 9K and anode 9A are formed in a flat state, a partition wall 9 is formed on them, and a plasma chamber 8a is formed between the partition wall 9 and another partition wall 9.

Next, the effect of the present example was examined by an experiment as will be mentioned below by actually preparing a plasma addressed display apparatus having the configuration as shown in Fig. 1.

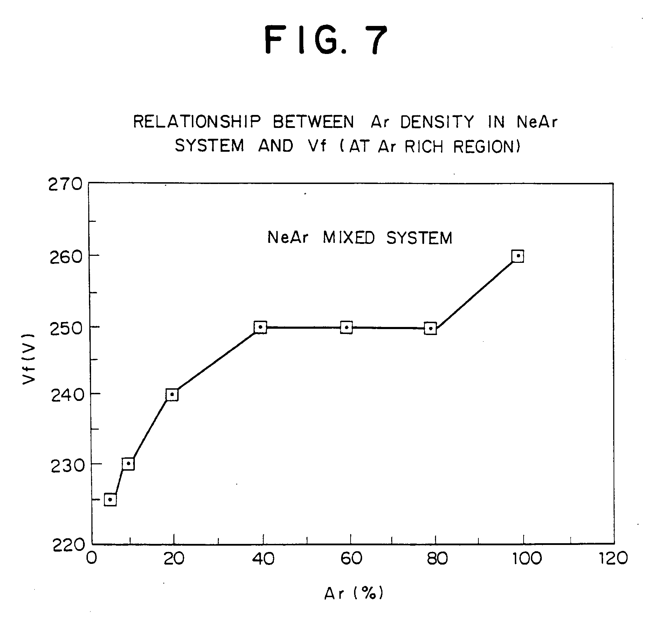

First, mixed gases obtained by adding the Ar to Ne with various proportions were prepared and were sealed in plasma chambers. The discharge voltages which were necessary were then measured. The results thereof are as shown in Fig. 7. In comparison with the Ne-based Penning gas (Ne_{99.5}Ar_{0.5}), it is clear that, although the discharge voltage rises also in the area of composition according to the present example, the amount of the rise can be suppressed to about 20V.

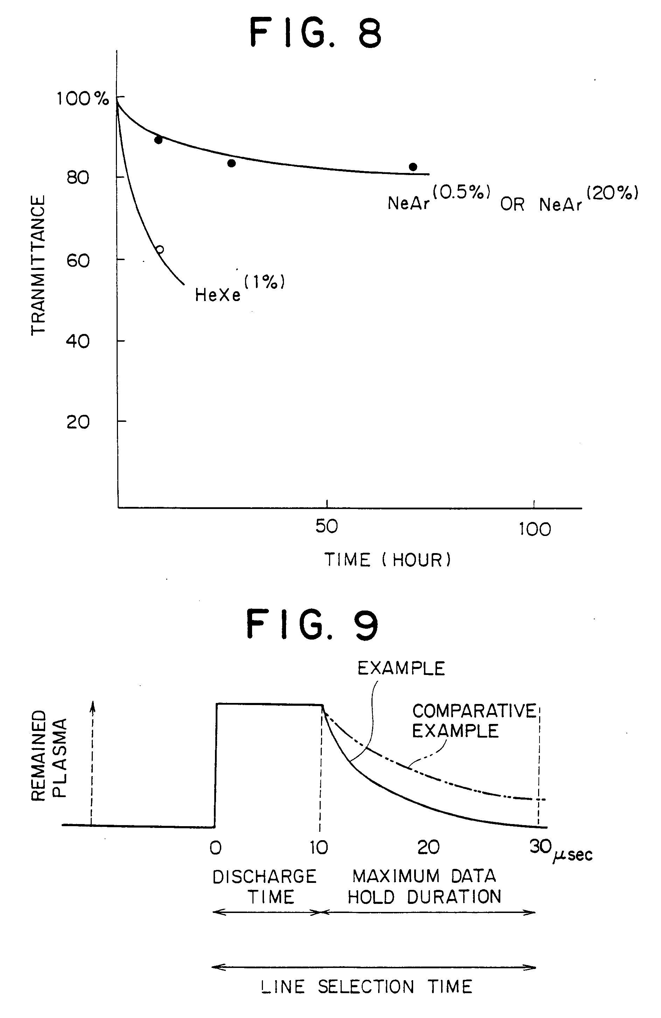

Next, an He-based Penning gas (He₉₉Xe₁), Ne-based Penning gas (Ne_{99.5}Ar_{0.5}), and a mixed gas (He₁₀₀₋ₓ Aₓ, x = 10 to 30) were prepared and were sealed in plasma chambers. The change of transmittance by the cathode sputtering was examined. Note that, the measurement conditions were determined so that the gas pressure was 200 Torr and a current per line was 100 mA. A discharge was carried out at a cycle of one discharge of 10 µsec for every 16 msec. The addition of mercury was not carried out. The obtained results are as shown in Fig. 8. In comparison with the He-based Penning gas, the Ne-based Penning gas and the mixed gas having a composition according to the present example had a very low rate of reduction of the transmittance.

Further, the He-based Penning gas (He₉₉Xe₁), Ne-based Penning gas (Ne_{99.5}Ar_{0.5}), and the mixed gas (Ne₈₀Ar₂₀) were prepared and were sealed in plasma chambers. A comparison of the discharge color was carried out. Note that, the comparison of the discharge color was carried out by setting the current per line as 100 mA. As a result, the proportion of the emitted light luminance among the He₉₉Xe₁, Ne_{99.5}Ar_{0.5}, and Ne₈₀Ar₂₀ was 1 : 18 : 3, and the color coordinates (x, y) became (0.33, 0.27), (0.63, 0.37), and (0.58, 0.39), respectively. Although not comparable to the He-based Penning gas, Ne₈₀Ar₂₀ has a sufficiently low luminance in comparison with the Ne-based Penning gas, and also the color of this is near white.

When speaking of this, by using an actual panel, where a discharge current per line in a 14 inch panel is 100 mA, the luminance of the discharge light of the Ne-based Penning gas reaches 0.3 nit. In the case of the He-based Penning gas, this is an amount that cannot be ignored with respect to a black level of 2 nit (determined by the light polarization plate liquid crystal), but in the case of Ne₈₀Ar₂₀, it becomes 0.1 nit or less, and a sufficient black level is obtained. The result can be expected to become a display panel having a good contrast.

As mentioned above, according to the above technical background, example a plasma addressed display apparatus which can exhibit good characteristics stably over a long period can be provided.

In the above description, the plasma addressed display apparatus was described as a specific example, but, it is clearly understood the above example can be applied to a plasma discharge apparatus, per se, and other display apparatus using such plasma discharge apparatus as a switching apparatus.

### EMBODIMENT of the invention.

In the above example, however, there is the problem of a long plasma attenuation. If the plasma attenuation is long, there is the problem that plasma will remain until the next line is selected and erroneous data voltage will be applied to a row where the plasma remains and therefore the pixel of the display cell corresponding to that portion will be driven erroneously.

This embodiment is intended to improve the the plasma discharge apparatus and the plasma-adressed electro-optical apparatus according to the above example.

In the embodiment, the plasma chambers 12 have sealed in them a mixed gas represented by Ne_{100-(x+y)} ArₓA_{y}. Here, A is Kr and Xe, x is 10 to 30 percent by volume, more preferably 15 to 25 percent by volume, and y is 1 to 10 percent by volume. Further, when Kr and Xe are included as A, the Kr is preferably contained in an amount of 1 to 5 percent by volume and the Xe in an amount of 1 to 5 percent by volume.

When the x is less than 10 percent by volume, the problem of emission of an orangish light peculiar to Ne occurs, while when it is over 30 percent by volume, the discharge voltage Vf ends up rising remarkably. Neither of these cases is preferable. When y is smaller than 1 percent by volume, the plasma attenuation time becomes longer, while when it is over 10 percent by volume, the other properties become poor. Neither of these is preferred either.

Next, the effect of the present invention was examined by an experiment as mentioned below in which a plasma addressed display apparatus having the structures as shown in Figs. 2 and 3 were actually fabricated.

First, mixed gases obtained by adding Ar to Ne in various proportions were prepared, were sealed in plasma chambers, and were measured as to the discharge voltages which were necessary. The results thereof are as shown in Fig. 7. In comparison with the Ne-based Penning gas (Ne_{99.5}Ar_{0.5}), it became clear that although the discharge voltage rises, the amount of the rise can be suppressed to about 20V.

Next, an He-based Penning gas (He₉₉Xe₁) and a mixed gas of the composition according to the present invention (Ne₇₆Ar₂₀Kr₂Xe₂) were prepared, were sealed in plasma chambers, and were examined as to the change of transmittance by cathode sputtering. Note that the measurement conditions were made a gas pressure of 200 Torr and a current per line of 100 mA and discharge was carried out at a cycle of a discharge of 10 µsec every 16 msec. Mercury was not added. The obtained results are as shown in Fig. 8. In comparison with the He-based Penning gas, the mixed gas of the composition according to the present invention had a very low rate of reduction of the transmittance.

Further, the He-based Penning gas (He₉₉Xe₁), Ne-based Penning gas (Ne_{99.5}Ar_{0.5}), and the mixed gas of the composition according to the present invention (Ne₇₆Ar₂₀Kr₂Xe₂) were prepared, were sealed in plasma chambers, and were compared as to the discharge color. Note that the comparison of the discharge color was carried out by setting the current per line as 100 mA. As a result, the ratio of the luminance of the emitted light among the He₉₉Xe₁, Ne_{99.5}Ar_{0.5}, and Ne₇₆Ar₂₀Kr₂Xe₂ was 1:18:3 and the color coordinates (x, y) became (0.33, 0.27), (0.63, 0.37), and (0.58, 0.39), respectively. Although not comparable to the He-based Penning gas, Ne₇₆Ar₂₀Kr₂Xe₂ has a sufficiently low luminance in comparison with the Ne-based Penning gas and also its color is near white.

When speaking of this using an actual panel, where a discharge current per line in a 14-inch panel is 100 mA, the luminance of the emitted light of the Ne-based Penning gas reaches 0.3 nit. In the case of the He-based Penning gas, it is an amount that cannot be ignored with respect to a black level of 2 nit (determined by the light polarization plate liquid crystal), but in the case of Ne₇₆Ar₂₀Kr₂Xe₂, it becomes 0.1 nit or less and so a sufficient black level is obtained and it can be expected that the result will become a display panel having a good contrast.

When Ne₇₆Ar₂₀Kr₂Xe₂ was used as the discharge gas of the plasma addressed display apparatus, the plasma attenuation time was found to be 20 µsec. When Ne₇₀Ar₂₀Kr₅Xe₅ was used as the discharge gas of the plasma addressed display apparatus, the plasma attenuation time was found to be 20 µsec. When Ne₇₈Ar₂₀Kr₂ was used as the discharge gas of the plasma addressed display apparatus, the plasma attenuation time was found to be 30 µsec. When Ne₇₈Ar₂₀Xe₂ was used as the discharge gas of the plasma addressed display apparatus, the plasma attenuation time was found to be 30 µsec. As a comparison, Ne₈₀Ar₂₀ was used as the discharge gas of the plasma addressed display apparatus, whereupon the plasma attenuation time was found to be 40 µsec.

As shown in Fig. 9, in a picture of the double speed NTSC system, the assigned time per line (selection time) is 30 µsec. Further, in the Japanese "high vision" system (high definition system), it is a shorter 15 µsec. The discharge time accounts for 10 µsec of this. According, in a double speed NTSC system, the maximum data holding time becomes 20 µsec and so, in the case of a comparative example using Ne₈₀Ar₂₀ as the discharge gas, plasma will remain until the next line selection and there will be a chance of erroneous writing of data and a sufficient contrast will not be obtained. As opposed to this, in the embodiment of the present invention using Ne₇₆Ar₂₀Kr₂Xe₂ or Ne₇₀Ar₂₀Kr₅Xe₅ as the discharge gas, as shown in Fig. 7, no plasma will remain at the time of the next line selection, so it is possible to prevent erroneous writing of data and a sufficient contrast can be obtained in the apparatus even in a double speed NTSC display.

Note that the present invention is not limited to the above embodiment. Various modifications may be made within the scope of the invention as defined in the claims.

For example, the plasma addressed display apparatus according to the above embodiments was a plasma addressed display apparatus, but the invention is not limited to this. For example, the configuration of the cathode electrodes and anode electrodes of the plasma addressed display apparatus is not limited to that of the above embodiment, but can be modified in various ways. For instance, when performing AC discharge, either of the electrodes can be buried in the dielectric layer and not be directly exposed in the plasma chambers. Further, the plasma addressed display apparatus according to the present invention can be applied to optical modulators and other plasma addressed display apparatus in the broader sense.

As explained above, according to the plasma addressed display apparatus of the present invention, it is possible to form plasma stabler compared with the conventionally used He-based a Penning gas with little problem of the scattering and loss of gas molecules from the plasma cell.

Also, in comparison with the He-based Penning gas, with the Ne-based mixed gas according to the present invention, the rate of advance of the cathode sputtering is much slower in the same way as the conventional Ne-based Penning gas and the rate of deterioration of the transmittance due to such cathode sputtering is slower by one order than a case where the He-based Penning gas is used.

Further, where the mixed gas according to the present invention is used, although not comparable to the case where the He-based Penning gas is used, the luminance is sufficient low in comparison with the case of the Ne-based Penning gas, the color is close to white, and the contrast of the display and the color purity are not substantially impaired, so good characteristics are obtained.

Note that, by adding Ar or the like to the Ne, the discharge voltage Vf which is needed rises in comparison with the case of the Ne-based Penning gas, but in the present invention, the amount of addition thereof is restricted to 10 to 30 percent by volume, and therefore the amount of rise thereof is suppressed to about 20V and it is possible to substantially prevent problems such as a rise of the power consumption, voltage resistance of the driver transistor, etc.

Further, in the present invention, since a specific ratio of Kr and Xe is mixed in the Ne-Ar (10 to 30 percent by volume)-based gas, the attenuation time of the plasma can be reduced to about one-half that of the Ne-Ar (10 to 30 percent by volume)-based gas. If the attenuation time of the plasma is made shorter, there is no longer erroneous application of data voltage to pixels corresponding to plasma chambers which should inherently not be written in at the time of the next line selection and a sufficient contrast can be obtained.

In the above description, the plasma addressed display apparatus was described as a specific example, but, it is clearly understood the present invention can be applied to a plasma discharge apparatus, per se, and other display apparatus using such plasma discharge apparatus as a switching apparatus.

## Claims

1. A plasma discharge apparatus comprising:
a pair of substrates (3, 7) for forming a discharge space (12); and
an ionizable gas sealed in the discharge space (12),
said ionizable gas being a mixed gas comprising neon plus argon plus xenon,
**characterized in** that
said ionizable mixed gas comprises in addition krypton to form a mixed gas comprising neon plus 10 to 30 percent by volume of argon, 1 to 5 percent by volume of krypton, and 1 to 5 percent by volume of xenon.

2. A plasma discharge apparatus as set forth in claim 1, wherein one of said pair of substrates comprises a dielectric sheet (3).

3. A plasma discharge apparatus as set forth in claim 2, further comprising an electro-optical cell holding an electro-optical material (6) between said dielectric sheet (3) and a glass substrate (4).

4. A plasma discharge apparatus as set forth in claim 3, wherein said electro-optical cell comprises a liquid crystal display cell (1) which has a plurality of signal electrodes (5) arranged in parallel at the inside of said glass substrate (4) and which has as said electro-optical material (6) a liquid crystal.

5. A plasma discharge apparatus as set forth in claim 4, wherein the other (7) of the pair of substrates has a plurality of discharge electrodes (9A, 9K) on it and a plasma discharge is caused between adjoining discharge electrodes to address the liquid crystal cell.

6. A plasma addressed electro-optical apparatus comprising:
a plasma cell (2) where plasma discharge is performed;
an ionizable gas sealed in the plasma cell (2), the ionizable gas being a mixed gas comprising neon,
argon and xenon; and
an electro-optical cell (1) layered on said plasma cell (2) and addressed by the plasma discharge,
**characterized in that**
said mixed gas comprises in addition krypton to form a mixed gas consisting of neon plus 10 to 30 percent by volume of argon, 1 to 5 percent by volume of krypton, and 1 to 5 percent by volume of xenon.

7. A plasma addressed electro-optical apparatus as set forth in claim 6, further comprising a dielectric sheet (3) interposed between said plasma cell (2) and electro-optical cell.

8. A plasma addressed electro-optical apparatus as set forth in claim 7, wherein said electro-optical cell (1) is a liquid crystal display cell comprising a liquid crystal (6) filled between a first glass substrate (4) having a plurality of signal electrodes (5) arranged in parallel on the inside and said dieelectrlc sheet (3).

9. A plasma addressed electro-optical apparatus as set forth in claim 8, wherein said plasma cell (2) comprises a second glass substrate (7) and said dieelectric sheet (3) between which is sealed said ionizable gas.

10. A plasma addressed electro-optical apparatus as set forth in claim 9, wherein said plasma cell (2) is provided with a plurality of discharge electrodes (9A, 9K) formed on said second glass substrate (7) and a plasma discharge is caused between adjoining discharge electrodes to address the electro-optical cell (1).

## Patentansprüche

1. Plasmaentladungsvorrichtung mit:
einem Paar Substrate (3, 7) zum Ausbilden eines Entladungsraumes (12) und
einem in dem Entladungsraum (12) eingeschlossenen ionisierbaren Gas,
wobei das ionisierbare Gas als Mischgas ausgebildet ist und Neon, Argon und Xenon enthält,
**dadurch gekennzeichnet,**
daß das ionisierbare Mischgas zusätzlich Krypton aufweist, um ein Mischgas aus Neon mit 10 bis 30 Vol.-% Argon, 1 bis 5 Vol.-% Krypton sowie 1 bis 5 Vol.-% Xenon zu bilden.

2. Plasmaentladungsvorrichtung nach Anspruch 1,
bei welcher eines des Paares Substrate eine dielektrische Platte (3) aufweist.

3. Plasmaentladungsvorrichtung nach Anspruch 2,
welche ferner eine elektro-optische Zelle aufweist, die ein elektro-optisches Material (6) zwischen der dielektrischen Platte (3) und einem Glassubstrat (4) hält.

4. Plasmaentladungsvorrichtung nach Anspruch 3,
bei welcher die elektro-optische Zelle eine Flüssigkristallanzeigezelle (1) mit einer Mehrzahl Signalelektroden (5) aufweist, die parallel auf der Innenseite des Glassubstrats (4) angeordnet sind, und
bei welcher als elektro-optisches Material (6) ein Flüssigkristall vorgesehen ist.

5. Plasmaentladungsvorrichtung nach Anspruch 4,
bei welcher auf dem anderen (7) des Paares Substrate eine Mehrzahl Entladungselektroden (9A, 9K) vorgesehen ist und
bei welcher eine Plasmaentladung zwischen angrenzenden Entladungselektroden bewirkt wird, um die Flüssigkristallzelle zu addressieren.

6. Plasmaaddressierte elektro-optische Vorrichtung mit:
einer Plasmazelle (2), in welcher eine Plasmaentladung ausgeführt wird;
einem in der Plasmazelle (2) eingeschlossenen ionisierbaren Gas, wobei das ionisierbare Gas ein Mischgas mit Neon, Argon und Xenon ist; und
einer elektro-optischen Zelle (1), welche auf der Plasmazelle (2) angeordnet ist und welche durch die Plasmaentladung addressiert wird,
**dadurch gekennzeichnet,**
daß das Mischgas zusätzlich Krypton aufweist, um ein Mischgas mit Neon, 10 bis 30 Vol.-% Argon, 1 bis 5 Vol.-% Krypton und 1 bis 5 Vol.-% Xenon zu bilden.

7. Plasmaaddressierte elektro-optische Vorrichtung nach Anspruch 6,
welche ferner eine zwischen der Plasmazelle (2) und der elektro-optischen Zelle angeordnete dielektrische Platte (3) aufweist.

8. Plasmaaddressierte elektro-optische Vorrichtung nach Anspruch 7,
bei welcher die elektro-optische Zelle (1) als Flüssigkristallanzeigezelle ausgebildet ist, welche einen Flüssigkristall (6) aufweist, der zwischen einem Glassubstrat (4) mit einer Mehrzahl auf deren Innenseite parallel angeordneter Signalelektroden und der dielektrischen Platte (3) gefüllt ist.

9. Plasmaaddressierte elektro-optische Vorrichtung nach Anspruch 8,
bei welcher die Plasmazelle (2) ein zweites Glassubstrat (7) und die dielektrische Platte (3) aufweist, zwischen denen das ionisierbare Gas eingeschlossen ist.

10. Plasmaaddressierte elektro-optische Vorrichtung nach Anspruch 9,
bei welcher die Plasmazelle (2) eine Mehrzahl Entladungselektroden (9A, 9K) aufweist, die auf dem zweiten Glassubstrat (7) ausgebildet sind, und
bei welcher eine Plasmaentladung zwischen angrenzenden Entladungselektroden bewirkt wird, um die elektro-optische Zelle (1) addressieren.

## Revendications

1. Appareil à décharge de plasma comprenant :
une paire de substrats (3, 7) pour former un espace de décharge (12) ; et,
un gaz ionisable enfermé par scellement dans l'espace de décharge (12),
ledit gaz ionisable étant un mélange de gaz comprenant du néon plus de l'argon plus du xénon,
caractérisé en ce que ledit mélange de gaz ionisable comprend en plus du krypton pour former un mélange de gaz comprenant du néon plus 10 à 30 pour cent par volume d'argon, 1 à 5 pour cent par volume de krypton et 1 à 5 pour cent par volume de xénon.

2. Appareil à décharge de plasma tel que défini dans la revendication 1, dans lequel l'un de ladite paire de substrats comprend une feuille diélectrique (3).

3. Appareil à décharge de plasma tel que défini dans la revendication 2, comprenant en outre une cellule électro-optique maintenant un matériau électro-optique (6) entre ladite feuille diélectrique (3) et un substrat de verre (4).

4. Appareil à décharge de plasma tel que défini dans la revendication 3, dans lequel ladite cellule électro-optique comprend une cellule d'affichage à cristal liquide (1) qui a une pluralité d'électrodes de signaux (5) disposées en parallèle à l'intérieur dudit substrat de verre (4) et qui a comme dit matériau électro-optique (6) un cristal liquide.

5. Appareil à décharge de plasma tel que défini dans la revendication 4, dans lequel l'autre (7) de la paire de substrats comporte une pluralité d'électrodes de décharge (9A, 9K) sur celui-ci et une décharge de plasma est produite entre des électrodes de décharge adjacentes pour adresser la cellule à cristal liquide.

6. Appareil électro-optique adressé par plasma comprenant :
une cellule à plasma (2) où une décharge de plasma est réalisée ;
un gaz ionisable enfermé par scellement dans la cellule à plasma (2), le gaz ionisable étant un mélange de gaz comprenant du néon et du xénon ; et,
une cellule électro-optique (1) disposée en couches sur ladite cellule à plasma (2) et adressée par la décharge de plasma.
caractérisé en ce que ledit mélange de gaz comprend en plus du krypton pour former un mélange de gaz composé de néon plus 10 à 30 pour cent par volume d'argon, 1 à 5 pour cent par volume de krypton, et 1 à 5 pour cent par volume de xénon.

7. Appareil électro-optique adressé par plasma tel que défini dans la revendication 6, comprenant en outre une feuille de diélectrique (3) interposée entre ladite cellule à plasma (2) et ladite cellule électro-optique.

8. Appareil électro-optique adressé par plasma tel que défini dans la revendication 7, dans lequel ladite cellule électro-optique (1) est une cellule d'affichage à cristal liquide comprenant un cristal liquide (6) qui remplit l'espace entre un premier substrat de verre (4) ayant une pluralité d'électrodes de signaux (5) disposées en parallèle à l'intérieur et ladite feuille diélectrique (3).

9. Appareil électro-optique adressé par plasma tel que défini dans la revendication 8, dans lequel ladite cellule à plasma (2) comprend un deuxième substrat de verre (7) et ladite feuille diélectrique (3) entre lesquels est enfermé par scellement ledit gaz ionisable.

10. Appareil électro-optique adressé par plasma tel que défini dans la revendication 9, dans lequel ladite cellule à plasma (2) comporte une pluralité d'électrodes de décharge (9A, 9K) formées sur ledit deuxième substrat de verre (7) et une décharge de plasma est produite entre des électrodes de décharge adjacentes pour adresser la cellule électro-optique (1).
